# EUROPEAN PATENT APPLICATION

(11) **EP 1 014 157 A1**
(43) Date of publication of application: **28.06.2000**
(21) Application number: 98905803.7
(22) Date of filing: 09.03.1998
(51) Int. Cl.: G02F 1/1333

(54) **LIQUID CRYSTAL DISPLAY DEVICE HAVING ELECTRIC SHOCK PREVENTIVE STRUCTURE**

(30) Priority: 17.03.1997 JP 6348397
(71) Applicant: KABUSHIKI KAISHA PILOT, Tokyo 141 (JP)
(72) Inventor: IKEDA, Masahiko, Kanagawa 254-0024 (JP); ABE, Yutaka, Kanagawa 254-0821 (JP); SATO, Morio, Kanagawa 252-0821 (JP)
(74) Representative: Waldren, Robin Michael
(86) International application number: JP9800944
(87) International publication number: WO9841896

(57) **Abstract**

A liquid crystal display device provided with an electric shockproof structure, comprising at least a high resistance electrode layer 6 and a liquid crystal-dispersed polymer layer 2 in which liquid crystal 3 is finely dispersed in a polymer matrix 4, wherein the high resistance electrode layer 6 described above has a surface resistance of 10⁴ Ω/□ or more and less than 10⁸Ω/□ at a temperature of 25°C and a relative humidity of 50 %.

## Description

### Technical Field

The present invention relates to a liquid crystal display device provided with an electric shockproof structure.

### Background Art

Among liquid crystal display devices, a liquid crystal display device comprising a high electric resistance layer, a liquid crystal-dispersed polymer layer in which liquid crystal is finely dispersed in a polymer matrix and a transparent insulator layer, each of which is laminated in order on a conductive layer is disclosed in Japanese Patent Application Laid-Open No. Hei 5-224182 and Japanese Patent Application Laid-Open No. Hei 5-28153. In these liquid crystal display devices, the conductive layer had a low surface resistance, and therefore an image could be written/erased sufficiently well by applying/removing electric charges between the conductive layer and the surface of the liquid crystal display device. In order to elevate the writing/erasing properties of the image, the surface resistance of the conductive layer tended to be lowered as much as possible.

While an image is displayed on a liquid crystal display device, a lot of charges is present on the display screen. This charge is present on the display screen in compliance with charges on a conductive layer. There is the problem that if the conductive layer is exposed to the outside by scratches produced on the liquid crystal display screen and a human body touches both charges on the conductive layer and the display screen, a large amount of charges streams at one time through the human body, and an electric shock is caused.

The present invention has been made in order to solve the conventional problems described above, and an object thereof is to provide a liquid crystal display device provided with an electric shockproof structure which prevents an electric shock from being caused even when the surface of a liquid crystal display screen is scratched and a conductive layer is exposed to the outside and which does not damage writing/erasing properties intrinsic to the liquid crystal display device.

### Disclosure of the Invention

In order to achieve the object described above, the liquid crystal display device of the present invention provided with an electric shockproof structure is characterized by comprising at least a high resistance electrode layer and a liquid crystal-dispersed polymer layer in which liquid crystal is finely dispersed in a polymer matrix, wherein said high resistance electrode layer has a surface resistance of 10⁴ Ω/□ or more and less than 10⁸ Ω/□ at a temperature of 25°C and a relative humidity of 50 %.

### Brief Description of the Drawing

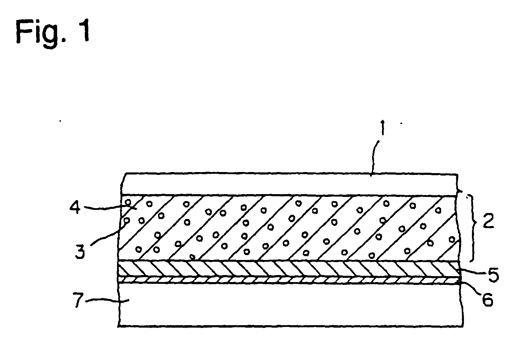

Fig. 1 is a schematic longitudinal cross section showing the liquid crystal display device provided with an electric shockproof structure of the present invention.

### Best Mode for Carrying Out the Invention

The preferred liquid crystal display device provided with an electric shockproof structure comprises mainly a high resistance electrode layer having a surface resistance of 10⁴ Ω/□ or more and less than 10⁸ Ω/□ at a temperature of 25°C and a relative humidity of 50 %, a transparent high electric resistance layer having a volume resistivity of 10¹³ Ω·cm or more at a temperature of 20°C and a relative humidity of 90 %, a liquid crystal-dispersed polymer layer in which liquid crystal is finely dispersed in a polymer matrix and which has a volume resistivity of 10¹³ Ω·cm or more at a temperature of 20°C and a relative humidity of 90 % and a transparent insulator layer having a volume resistivity of 10¹³ Ω·cm or more at a temperature of 20°C and a relative humidity of 90 % each of which is laminated in this order.

This high resistance electrode layer of the liquid crystal display device may be either transparent or opaque and has a surface resistance of 10⁴ Ω/□ or more and less than 10⁸ Ω/□ at a temperature of 25°C and a relative humidity of 50 %. As described above, the high resistance electrode layer has a surface resistance of 10⁴ Ω/□ or more and less than 10⁸ Ω/□ at a temperature of 25°C and a relative humidity of 50 %, and therefore the high resistance electrode layer itself acts as a limited resistance, so that if the liquid crystal display screen is scratched to produce pinholes and the high resistance electrode layer is exposed to the outside of the liquid crystal display screen, the amount of streaming current is controlled even if a human body touches both the high resistance electrode layer and charges on the display screen. If the high resistance electrode layer has a surface resistance of less than 10⁴ Ω/□ at a temperature of 25°C and a relative humidity of 50 %, an electric shock can not be prevented sufficiently well. On the other hand, if it is 10⁸ Ω/□ or more, a problem is brought about on the erasability of the image.

The high resistance electrode layer is a metal or metal alloy foil or can be obtained by turning the surface or the whole part of a plastics or glass substrate to conductive with conductive materials such as metals, metal alloys, metal oxides, graphite and conductive polymers. Examples thereof include those obtained by turning the surface of a polyester film to conductive with aluminum, titanium, chromium, tin, rhodium, gold, stainless steel, titanium nitride, nickel-chromium, aluminum-chromium or indium tin oxide.

The liquid crystal-dispersed polymer layer of the liquid crystal display device according to the present invention is obtained by dispersing liquid crystal in a polymer matrix. A process for dispersing liquid crystal in a polymer matrix includes a phase separation process of evaporating a common solvent for a polymer & liquid crystal (common solvent casting process), a polymerization phase separation process in which a polymer precursor in a liquid crystal & polymer precursor mixture is polymerized by light or heat, a melting/cooling phase separation process in which liquid crystal and a polymer are cooled from a heated and molten state and a process in which liquid crystal that is emulsion-dispersed in an aqueous resin is applied and dried to disperse in a polymer matrix, and they can suitably be used.

The polymer capable of being used for this liquid crystal-dispersed polymer layer may be any one as long as it is a polymer which is hard to be miscible with the liquid crystal, and to be specific, it includes vinyl resins such as chlorinated polyethylene, polystyrene and acryl resins, vinylidene chloride resins, polyvinyl acetal resins, cellulose resins, ionomers, polyamide, polycarbonate, styrene-butadiene rubber, chlorosulfonated polyethylene, polyester and epoxy resins. In this case, the polyvinyl acetal resins include polyvinyl formal, polyvinyl acetal, polyvinyl butyral and the like.

In particular, polymers having cross-linking structure (hereinafter referred to as a cross-linked polymer) are preferred as the polymer constituting the liquid crystal-dispersed polymer layer. If the cross-linked polymer is used, the cross-linked polymer is not compatible at all with the liquid crystal even when the liquid crystal display device of the present invention is left in a high temperature state, and therefore the stable liquid crystal-finely dispersed structure can be maintained. This makes it possible to obtain a liquid crystal element having durability in which performances are not deteriorated with the passage of time.

The cross-linked polymer includes, for example, cross-linked polymers obtained by mixing and reacting polymers having functional groups such as a double bond, hydroxy, carboxy, epoxy, isocyanate, amino and chlorosulfone with cross-linking agents which react with functional groups, and cross-linked polymers obtained by mixing and reacting polymers having the functional groups described above with reactive polymers.

The cross-linking agents used for the reaction described above include isocyanate compounds, organic peroxides, amine compounds, epoxy compounds, dicarboxylic acides or carboxylic anhydrides, formaldehyde, dialdehydes, diols, bisphenols and photo cross-linking agents (photo polymerization initiators), and the reactive polymers include phenol resins, amino resins, polyols and epoxy resins.

The preferred cross-linked polymer includes cross-linked polymers obtained by reacting di- or polyisocyanates with polymers such as polyvinyl acetal resins, epoxy resins, acryl resins having functional groups such as a hydroxy group and a carboxy group, and polyester resins. More preferred cross-linked polymers are cross-linked polymers obtained by reacting di- or polyisocyanates with polyvinyl acetal resins. In this case, the polyvinyl acetal resins are polyvinyl formal, polyvinyl acetal, polyvinyl butyral and the like.

The liquid crystal used for the liquid crystal-dispersed polymer layer is preferably nematic liquid crystal having a positive dielectric anisotropy. The liquid crystal phase has preferably a temperature range of -10 to 100°C in terms of practical use and a birefringence index Δn of 0.2 or more in order to display vividly the recorded image.

The liquid crystal-dispersed polymer layer of this liquid crystal display device has preferably a volume resistivity of 10¹³ Ω·cm or more at a temperature of 20°C and a relative humidity of 90 % (hereinafter abbreviated as 90 % RH). This makes the contour of the recorded image vivid even under an environment of a temperature of 20°C and 90 % RH and improves the memory performance, the erasability and the durability. The reason therefor is that applied static charge becomes hard to move and attenuate and therefore is maintained for a long time, so that even if time passes, the contour of the recorded image keeps a vivid condition without becoming indistinct. Further, applied static charge becomes hard to move and attenuate as well in the direction of the front and back of the liquid crystal-dispersed polymer layer, and therefore the erasability goes up as well. However, in the layer having a volume resistivity of less than 10¹³ Ω·cm, applied static charge becomes easy to move and attenuate on the surface and in the direction of the front and back of the liquid crystal-dispersed polymer layer, and therefore the static charge disappears and attenuates as time passes, so that the static charge becomes imbalanced on the surface and in the direction of the front and back of the liquid crystal-dispersed polymer layer. As a result, the contour, the memory performance and the erasability of the recorded image are deteriorated.

The transparent insulator layer of the liquid crystal display device according to the present invention is composed of a transparent polymer having a high electric resistance. The transparent polymer has preferably a volume resistivity of 10¹³ Ω·cm or more at a temperature of 20°C and 90 % RH and includes, for example, polyethylene terephthalate, polyethylene naphthalate, polypropylene, polyethylene, polyvinyl chloride, polysulfone, polyphenylene oxide, ionomer, polycarbonate, nylon and mixtures thereof. The insulator layer can be obtained by laminating films comprising the materials described above with a bond or adhesive, applying and drying a solution of a material having the physical properties described above or applying a solution of a reactive material and then reacting it. If a material having a volume resistivity of less than 10¹³ Ω·cm at a temperature of 20°C and 90 % RH is used for the insulator layer, problems on the performances are caused for the same reason as in the case of the liquid crystal-dispersed polymer layer described above, and the practical liquid crystal display is not prepared.

The transparent high electric resistance layer of the liquid crystal display device of the present invention is provided between the high resistance electrode layer and the liquid crystal-dispersed polymer layer, and the volume resistivity thereof is preferably 10¹³ Ω·cm or more at a temperature of 20°C and 90 % RH. Because of surer prevention of movement and attenuation of static charge applied on the surface of the liquid crystal display device, this layer improves the performances such as the vividness of the contour of the recorded image, the memory performance and the erasability. If the layer having a volume resistivity of less than 10¹³ Ω·cm at a temperature of 20°C and 90 % RH is used, problems on the performances are caused for the same reasons as in the case of the liquid crystal-dispersed polymer layer described above, and therefore such a layer is not practical.

Polymers used for the transparent high electric resistance layer include vinyl resins such as chlorinated polyethylene, polystyrene and acryl resins, vinylidene chloride resins, polyvinyl acetal resins, cellulose resins, ionomers, polyamide, polycarbonate, styrene-butadiene rubber, chlorosulfonated polyethylene, polyester and epoxy resins. In this case, the polyvinyl acetal resins are polyvinyl formal, polyvinyl acetal, polyvinyl butyral and the like.

Further, the following cross-linked polymers can also be used as the polymer for the transparent high electric resistance layer. They include, for example, cross-linked polymers obtained by mixing and reacting polymers having functional groups such as a double bond, hydroxy, carboxy, epoxy, isocyanate, amino and chlorosulfone with cross-linking agents which react with functional groups, and cross-linked polymers obtained by mixing and reacting polymers having the functional groups described above with reactive polymers.

The cross-linking agents used for the reaction described above include isocyanate compounds, organic peroxides, amine compounds, epoxy compounds, dicarboxylic acids or carboxylic anhydrides, formaldehyde, dialdehydes, diols, bisphenols and photo cross-linking agents (photo polymerization initiators), and the reactive polymers include phenol resins, amino resins, polyols and epoxy resins.

The preferred cross-linked polymer includes cross-linked polymers obtained by reacting di- or polyisocyanates with polymers such as polyvinyl acetal resins, epoxy resins, acryl resins having functional groups such as a hydroxy group and a carboxy group and polyester resins. More preferred cross-linked polymers are cross-linked polymers obtained by reacting di- or polyisocyanates with polyvinyl acetal resins. In this case, the polyvinyl acetal resins are polyvinyl formal, polyvinyl acetal, polyvinyl butyral and the like.

The transparent high electric resistance layer can be obtained by applying a solution of a material for the layer or applying and reacting a solution of a reactive material. Or, it can be obtained as well by laminating a film having a high electric resistance with a bond or adhesive.

The transparent high electric resistance layer has a thickness falling suitably in a range of 0.4 to 10 µm.

As a example of the reactive materials, there are combinations of, for example, di- or polyisocyanate compounds for the cross-liking agents with polyvinyl alkylal, epoxy resins, hydroxy and carboxyl groups-containing acryl resins or polyester resins for the compounds reacting with the above cross-linking agents.

Further, the transparent high electric resistance layer can be obtained as well by laminating a film having a high electric resistance with a bond or adhesive. The film having a high electric resistance includes films of polyethylene terephthalate, polyethylene naphthalate, polypropylene, polyethylene, polyvinyl chloride. polysulfone, polyphenylene oxide, ionomer and polycarbonate.

### Examples

The examples of the liquid crystal display device provided with an electric shockproof structure according to the present invention shall be explained in detail with reference to drawings, but the present invention shall by no means be restricted by these examples.

### Example 1

As shown in Fig. 1, a solution comprising the following component was applied as a high resistance electrode layer 6 on #50 LUMIRROR (50 µm polyethylene terephthalate film: manufactured by Toray Industries. Inc.) which was a substrate 7 so that the dried film thickness thereof was 3 µm, and then it was dried to be the layer:
COLCOAT SP2001 (transparent conductive paint: manufactured by Colcoat Co., Ltd.)

A solution comprising the following components was applied as a transparent high electric resistance layer 5 on the high resistance electrode layer 6 so that the dried film thickness thereof was 3 µm, and then it was dried and cured:

| | |
|---|---|
| 10 % solution of S-LECK KS-1 (polyvinyl acetal resin: manufactured by Sekisui Chemical Co., Ltd.) in ethyl acetate | 9.0 g |
| TAKENATE D110N (polyisocyanate: manufactured by Takeda Chemical Industries, Ltd.) | 0.4 g |

A solution comprising the following components was applied as a liquid crystal-dispersed polymer layer 2 on the transparent high electric resistance layer 5 so that the dried film thickness thereof was 7 µm, and then it was dried and cured:

| | |
|---|---|
| 10 % solution of S-LECK KS-1 (polyvinyl acetal resin: manufactured by Sekisui Chemical Co., Ltd.) in ethyl acetate | 2.1 g |
| TAKENATE D110N (polyisocyanate: manufactured by Takeda Chemical Industries, Ltd.) | 0.42 g |
| E44 (nematic liquid crystal: manufactured Merck AG) | 0.23 g |

Further, a solution comprising the following components was applied as a transparent insulator layer 1 on the liquid crystal-dispersed polymer layer 2 described above so that the dried film thickness thereof was 3 µm, and then it was dried and cured to prepare the liquid crystal display device of the present invention:

| | |
|---|---|
| X-22-8004 (silicone film-forming agent: manufactured by Shin-etsu Chemical Co., Ltd.) | 4.0 g |
| TAKENATE D110N (polyisocyanate: manufactured by Takeda Chemical Industries, Ltd.) | 0.18 g |

### Example 2

A solution comprising the following components was applied as a high resistance electrode layer 6 on #50 LUMIRROR (50 µm polyethylene terephthalate film: manufactured by Toray Industries Inc.) which was a substrate 7 so that the dried film thickness thereof was 4 µm, and then it was dried to be the layer:

| | |
|---|---|
| 10 % solution of S-LECK KS-1 (polyvinyl acetal resin: manufactured by Sekisui Chemical Co., Ltd.) in ethyl acetate | 2.0 g |
| ITO (tin-containing indium oxide ultrafine particles: manufactured by Sumitomo Cement Co., Ltd.) | 0.8 g |

Further, a transparent high electric resistance layer 5, a liquid crystal-dispersed polymer layer 2 and a transparent insulator layer 1 were applied thereon and then dried and cured as was the case with Example 1, thereby to prepare the liquid crystal display device of the present invention.

### Example 3

A solution comprising the following components was applied as a high resistance electrode layer 6 on #50 LUMIRROR (50 µm polyethylene terephthalate film: manufactured by Toray Industries Inc.) which was a substrate 7 so that the dried film thickness thereof was 3 µm, and then it was dried to be the layer:

| | |
|---|---|
| 10 % solution of S-LECK KS-1 (polyvinyl acetal resin: manufactured by Sekisui Chemical Co., Ltd.) in ethyl acetate | 2.2 g |
| ITO (tin-containing indium oxide ultrafine particles: manufactured by Sumitomo Cement Co., Ltd.) | 0.78 g |

Further, a transparent high electric resistance layer 5, a liquid crystal-dispersed polymer layer 2 and a transparent insulator layer 1 were applied thereon and then dried and cured as was the case with Example 1, thereby to prepare the liquid crystal display device of the present invention.

### Example 4

A solution comprising the following components was applied as a high resistance electrode layer 6 on #50 LUMIRROR (50 µm polyethylene terephthalate film: manufactured by Toray Industries Inc.) which was a substrate 7 so that the dried film thickness thereof was 3 µm, and then it was dried to be layer:

| | |
|---|---|
| 10 % solution of S-LECK KS-1 (polyvinyl acetal resin: manufactured by Sekisui Chemical Co., Ltd.) in ethyl acetate | 3.0 g |
| ITO (tin-containing indium oxide ultrafine particles: manufactured by Sumitomo Cement Co., Ltd.) | 0.7 g |

Further, a transparent high electric resistance layer 5, a liquid crystal-dispersed polymer layer 2 and a transparent insulator layer 1 were applied thereon and then dried and cured as was the case with Example 1, thereby to prepare the liquid crystal display device of the present invention.

### Comparative Example 1

An aluminum-deposited layer on #50 Mat MCC (aluminum-vacuum deposited polyethylene terephthalate film of 50 µm in which one face of a substrate 7 was subjected to matting surface treatment: manufactured by TOYO METALLIZING Co., Ltd.) was used as a high resistance electrode layer 6. Further, a transparent high electric resistance layer 5, a liquid crystal-dispersed polymer layer 2 and a transparent insulator layer 1 were applied thereon and then dried and cured as was the case with Example 1, thereby to prepare a comparative liquid crystal display device.

### Comparative Example 2

A solution comprising the following components was applied as a high resistance electrode layer 6 on #50 LUMIRROR (50 µm polyethylene terephthalate film: manufactured by Toray Industries Inc.) which was a substrate 7 so that the dried film thickness thereof was 3 µm, and then it was dried to be the layer:
DOTITE FC404CA (conductive paste: manufactured by Fujikura Kasei Co., Ltd.

Further, a transparent high electric resistance layer 5, a liquid crystal-dispersed polymer layer 2 and a transparent insulator layer 1 were applied thereon and then dried and cured as was the case with Example 1, thereby to prepare a comparative liquid crystal display device.

### Comparative Example 3

A solution comprising the following components was applied as a high resistance electrode layer 6 on #50 LUMIRROR (50 µm polyethylene terephthalate film: manufactured by Toray Industries Inc.) which was a substrate 7 so that the dried film thickness thereof was 3 µm, and then it was dried to be the layer:

| | |
|---|---|
| 10 % solution of S-LECK KS-1 (polyvinyl acetal resin: manufactured by Sekisui Chemical Co., Ltd.) in ethyl acetate | 3.5 g |
| ITO (tin-containing indium oxide ultrafine particles: manufactured by Sumitomo Cement Co., Ltd.) | 0.65 g |

Further, a transparent high electric resistance layer 5, a liquid crystal-dispersed polymer layer 2 and a transparent insulator layer 1 were applied thereon and then dried and cured as was the case with Example 1, thereby to prepare a comparative liquid crystal display device.

The liquid crystal display devices prepared in the examples and the comparative examples described above were evaluated for an electric shock and erasability according to the following tests.

### (1) Electric shock test

The liquid crystal display devices prepared in the examples and the comparative examples described above which was conditioned to a relative humidity of 50 % at 25°C were used for writing at a writing voltage of about 300 V to apply a charge on the whole surface of the liquid crystal display devices. Then, the palm of one hand was put on the surface of the display screen of the liquid crystal display devices prepared in the examples and the comparative examples, and a fingertip of the other hand was brought close to the high resistance electrode layer until touching to check whether or not an electric shock was felt. The contact area of the palm of one hand was about 0.0157 m², and the amount of a transferred charge was about 7.5 to 15 µC.
- ○:: electric shock was not felt
- X:: electric shock was felt

### (2) Erasability

The liquid crystal display devices prepared in the examples and the comparative examples described above which was conditioned to a relative humidity of 50 % at 25°C were used for writing at a writing voltage of about 300 V to obtain images. One hand touched the high resistance electrode layer, and the other hand held conductive non-woven fabric (VLS6209 F: manufactured by Japan Vilene Company, Ltd.) and scanned the display screen of the liquid crystal display devices to erase the written images. The erased parts were measured by means of a Macbeth reflection densitometer (RD-915), wherein a level that "the image has been erased" was defined by that an O. D. value (optical density) at the erased part was less than an O. D. value at a non-image part + 0.05:
- ○:: image was erased by one reciprocation
- △:: image was erased by two reciprocations
- X:: image was erased by three or more reciprocations

The results obtained are shown in Table 1.

**Table 1**

| | Surface resistance (Ω/□) | Electric shock | Erasability |
|---|---|---|---|
| Example 1 | 1.42 × 10⁶ | ○ | ○ |
| Example 2 | 7.01 × 10⁴ | ○ | ○ |
| Example 3 | 3.05 × 10⁵ | ○ | ○ |
| Example 4 | 1.73 × 10⁷ | ○ | △ |
| Comparative Example 1 | 1.39 × 10⁰ | X | ○ |
| Comparative Example 2 | 1.94 × 10³ | X | ○ |
| Comparative Example 3 | 4.13 × 10⁸ | ○ | X |

In Table 1, the surface resistance value was determined by means of LORESTA AP (low resistivity meter: manufactured by Mitsubishi Petrochemical Co., Ltd.) (at 25°C and 50 % RH). The surface resistance value of Comparative Example 3 was determined by means of a digital ULTRA HIGH RESISTANCE METER (R8340A: manufactured by Advantest Corp.) and an insulation resistance measuring specimen chamber (TR42: manufactured by Advantest Corp.) (at 25°C and 50 % RH).

In the examples and the comparative examples, a high resistance electrode layer was laminated on a polyethylene terephthalate film used as a substrate to prepare a liquid crystal display device, and it is also allowed to laminate a transparent insulator layer on a metal gloss surface, an aluminum-deposited film, a hologram sheet (light-interference sheet) and the like, and further to laminate thereon, a transparent high electric resistance layer, a liquid crystal-dispersed polymer layer and a transparent insulator layer to prepare a liquid crystal display device. A liquid crystal display device having further higher contrast can be obtained by using such reflective materials.

### Industrial Applicability

In the liquid crystal display device provided with an electric shockproof structure of the present invention, an image can be displayed by applying a charge on the display screen by means of a conductive member, and the image can easily be erased. Even when the high resistance electrode layer is exposed to the outside of the liquid crystal display device screen by scratches produced on the surface of the liquid crystal display screen and a human body touches directly both charges electrified on the surface of a liquid crystal display device screen and the high resistance electrode layer, a stream of a current is inhibited, so that an electric shock is not felt. Thus, not only the safety can be improved but also the writing/erasing properties of the liquid crystal element itself are not damaged.

Writing and erasing are possible as well by using, for example, a fingertip as a conductive member, and therefore the liquid crystal display device of the present invention can be applied to liquid crystal board for a handwriting. That is, it can be used for educational toys for little children as a safe liquid crystal board.

## Claims

1. A liquid crystal display device provided with an electric shockproof structure, characterized by comprising at least a high resistance electrode layer and a liquid crystal-dispersed polymer layer in which liquid crystal is finely dispersed in a polymer matrix, wherein said high resistance electrode layer has a surface resistance of 10⁴ Ω/□ or more and less than 10⁸ Ω/□ at a temperature of 25°C and a relative humidity of 50 %.

2. The liquid crystal display device provided with an electric shockproof structure as described in claim 1, characterized by comprising principally the liquid crystal-dispersed polymer layer in which liquid crystal is finely dispersed in a polymer matrix and a transparent insulator layer each of which is laminated in order on the high resistance electrode layer.

3. The liquid crystal display device provided with an electric shockproof structure as described in claim 1, characterized by comprising principally a transparent high electric resistance layer, the liquid crystal-dispersed polymer layer in which liquid crystal is finely dispersed in a polymer matrix and the transparent insulator layer each of which is laminated in order on the high resistance electrode layer.

4. The liquid crystal display device provided with an electric shockproof structure as described in claim 3, said transparent high electric resistance layer has a volume resistivity of 10¹³ Ω·cm or more at a temperature of 20°C and a relative humidity of 90 %.

5. The liquid crystal display device provided with an electric shockproof structure as described in claim 1, 2 or 3, wherein said polymer matrix comprises a cross-linked polymer obtained by reacting di- or polyisocyanate with a polyvinyl acetal resin.

6. The liquid crystal display device provided with an electric shockproof structure as described in claim 1, 2 or 3, wherein said liquid crystal-dispersed polymer layer has a volume resistivity of 10¹³ Ω·cm or more at a temperature of 20°C and a relative humidity of 90 %.

7. The liquid crystal display device provided with an electric shockproof structure as described in claim 2 or 3, wherein said transparent insulator layer has a volume resistivity of 10¹³ Ω·cm or more at a temperature of 20°C and a relative humidity of 90 %.

8. The liquid crystal display device provided with an electric shockproof structure as described in claim 1, 2 or 3, wherein said liquid crystal is nematic liquid crystal having a positive dielectric anisotropy and has a birefringence index of 0.2 or more.
